# EUROPÄISCHE PATENTSCHRIFT

(11) **EP 2 277 769 B1**
(45) Veröffentlichungstag und Bekanntmachung des Hinweises auf die Patenterteilung: **29.06.2011**
(21) Anmeldenummer: 10170636.4
(22) Anmeldetag: 23.07.2010
(51) Int. Cl.: B62K 25/28, B62J 99/00

(54) **Anzeigeeinrichtung**
Display device
Dispositif d'affichage

(30) Priorität: 23.07.2009 DE 202009010034 U
(43) Veröffentlichungstag der Anmeldung: 26.01.2011
(73) Patentinhaber: Canyon Bicycles GmbH, 56073 Koblenz (DE)
(72) Erfinder: Thoma, Vincenz, 56068 Koblenz (DE)
(74) Vertreter: von Kreisler Selting Werner

(56) Entgegenhaltungen:
- EP-A2- 0 499 092
- DE-A1- 19 614 744
- DE-T2- 60 306 805

## Beschreibung

Die Erfindung betrifft eine Anzeigeeinrichtung zur Anzeige des NegativFederwegs und/oder des maximalen Einfederwegs bei einem gefederten Fahrradhinterbau.

Bei Fahrrädern mit gefederten Hinterbau, insbesondere bei derartigen Mountainbikes wird üblicherweise der Hinterbaudämpfer so auf das Fahrergewicht eingestellt, dass bereits bei einem statischen Aufsitzen des Fahrers der Hinterbau etwas einfedert. Dieser bereits bei statischer Belastung hervorgerufene Einfederweg wird als Negativfederweg oder SAG bezeichnet. Aufgrund des Negativfederweges können beispielsweise Schlaglöcher besser ausgefedert werden, da der Hinterbau aufgrund der Entlastung in das Schlagloch ausfedert. Hierdurch ist der Fahrkomfort verbessert. Um einen hohen Fahrkomfort zu erzielen, muss der Negativfederweg möglichst exakt auf das Fahrergewicht eingestellt werden. Ferner ist es erforderlich, die Härte des Dämpfers, beziehungsweise die Federhärte derart einzustellen, dass ein Durchschlagen des Dämpfers vermieden ist.

Bei modernen Dämpfern handelt es sich um Dämpfer, die über einen Luftdruck einstellbar sind. Hierbei ist es möglich, die Feder- beziehungsweise Dämpfercharakteristik durch die Federelemente einzustellen. Zur Einstellung des Negativfederwegs, sowie auch zur Bestimmung der maximalen Einfederung ist es bei Federelementen mit Kolben bekannt, auf der Außenseite des Kolbens einen Ohrring anzuordnen. Beim Einfedern des Dämpfers wird der O-Ring verschoben, wobei der O-Ring aufgrund der Reibung beim Ausfedern des Kolbens in der entsprechenden Lage verbleibt. Der Negativfederweg kann somit dadurch bestimmt werden, dass der O-Ring zunächst bei ausgefederten Dämpferelement vollständig in Richtung des Dämpfergehäuses verschoben wird. Anschließend muss sich der Fahrer auf das Fahrrad setzen, sodass der Dämpfer einfedert. Nach dem Absteigen des Fahrers erfolgt ein Ausfedern des Dämpfers, sodass dann aufgrund der Lage des O-Rings der Negativfederweg, beziehungsweise SAG bestimmt werden kann. Auf der gleichmäßigen glatten Oberfläche eines Dämpferkolbens kann der tatsächliche Federweg jedoch nur schwer abgelesen werden. Der tatsächliche Einfederweg in Millimeter oder Prozent des maximal möglichen Federwegs kann somit nur schwierig bestimmt werden. Üblicherweise erfolgt daher durch den Benutzer nur eine grobe Abschätzung und keine Feineinstellung des Negativfederwegs. Durch die Lage dieses O-Rings kann nach einer Fahrradtour auch der maximale Einfederweg abgelesen werden. Auch dieser ist entsprechend ungenau.

Aus DE 60306805 T ist es bekannt, auf einem Tauchrohr einer Federgabel eine Skala anzuordnen. Mittels eines das Tauchrohr der Gabel umgebenden O-Ring kann somit der Einfederweg abgelesen werden. Das Anordnen einer Skala auf der Oberfläche des Tauchrohrs hat jedoch den Nachteil, dass hierdurch die glatte Oberfläche des Tauchrohrs beschädigt wird. Dies ist insofern nachteilig, da das Tauchrohr durch einen Simmerring gegenüber dem Kolben abgedichtet ist und entsprechende Beschädigungen der Oberfläche des Tauchrohrs zu Undichtigkeiten führen können. Insbesondere können derartige Unebenheiten auch dazu führen, dass Verschmutzungen, die den Simmerring ebenfalls beschädigen, stärker anhaften.

Ferner ist es bekannt, zur Bestimmung des Negativfederwegs Markierungen am Sattelrohr vorzusehen. Diese Markierungen befinden sich in dem Bereich, in dem beispielsweise die Sattelstreben an dem Sattelrohr vorbeigeführt sind. Sobald sich der Fahrer auf das Fahrrad setzt, bewegt sich die Sattelstrebe nach oben. Es kann dann abgelesen werden, ob sich die Sattelstrebe in dem vorgegebenen markierten Bereich befindet. Eine entsprechende Markierung am Sattel ist beispielsweise auch bekannt, wenn nicht die Sattelstreben selbst am Sattelrohr vorbeigeführt sind, sondern ein entsprechendes Verbindungselement wie eine Wippe zwischen den Sattelstreben und dem Dämpfer vorgesehen ist. Nachteilig an derartige Markierungen am Sattelrohr ist, dass diese nur sehr schwer abgelesen werden können, da ein Ablesen erfolgen muss, während der Fahrer auf dem Fahrrad sitzt. Zudem ist eine derartige Anzeige äußerst ungenau. Der maximale Einfederweg kann hierdurch ferner nicht bestimmt werden.

Aufgabe der Erfindung ist es, eine Anzeigeeinrichtung zur Anzeige des Negativfederwegs und/oder des maximalen Einfederwegs bei einem gefederten Fahrradhinterbau zu schaffen, mit der ein zuverlässiges und einfaches Ablesen des Negativfederwegs und/oder des maximalen Einfederwegs möglich ist.

Die Lösung der Aufgabe erfolgt erfindungsgemäß durch die Merkmale des Anspruchs 1.

Der gefederte Hinterbau eines Fahrrads weist ein Hinterbauelement auf, das beim Ein- und Ausfedern des Hinterbaus eine Schwenkbewegung um eine Lagerachse ausführt. Bei einem derartigen Hinterbauelement handelt es sich beispielsweise um eine Sattelstrebe, ein Zwischenelement wie einer Wippe oder eine Kettenstrebe. Erfindungsgemäß wird die Schwenkbewegung eines Hinterbauelements um eine Lagerachse zur Anzeige, beziehungsweise Bestimmung des Negativfederwegs und/oder des maximalen Einfederwegs genutzt. Hierzu ist erfindungsgemäß ein erstes Anzeigeelement vorgesehen, dass das Lager zumindest teilweise umgibt und um die Lagerachse relativ zum Hinterbauelement schwenkbar ist. Ein zweites Anzeigeelement ist mit dem Hinterbauelement verbunden. Beim Ein- und Ausfedern des Hinterbaus erfolgt somit zwischen den beiden Anzeigeelementen eine Relativbewegung. Durch Ablesen der erfolgten Relativbewegung kann der Negativfederweg und je nach Ausgestaltung gegebenenfalls auch unmittelbar der maximale Einfederweg abgelesen werden.

Bei einer ersten Ausführungsform der Erfindung weist das eine der Anzeigeelemente eine Skala, das andere der Anzeigeelemente einen Zeiger wie einen auf dem Anzeigeelement vorgesehenen Strich auf. Aufgrund der Lage des Zeigers relativ zu der Skala kann der Negativfederweg abgelesen werden. Bevorzugt ist hierbei das Vorsehen eines Schleppzeigers, der stets in seiner Maximalstellung verbleibt. Durch ein Aufsteigen auf das Fahrrad wird ein derartiger Schleppzeiger in eine Position verschoben, die dem Negativfederweg entspricht. Da ein derartiger Schleppzeiger stets in der Maximalstellung verbleibt, kann beispielsweise nach einer Fahrradtour auch der maximale Einfederweg abgelesen werden.

Vorzugsweise ist das zweite Anzeigeelement fest mit dem Hinterbauelement verbunden. Hierbei kann das zweite Anzeigerelement direkt an einer Oberfläche des Hinterbauelements angeordnet, beispielsweise auf die Oberfläche aufgezeichnet sein, wobei es sich bei dem zweiten Anzeigelement in besonders bevorzugter Ausführungsform um eine Skala handelt.

Da das erste Anzeigeelement vorzugsweise um die Lagerachse schwenkbar ist, ist es besonders bevorzugt, ein Mitnahmeelement vorzusehen. Das Mitnahmeelement bewirkt beim Einfedern des Hinterbaus ein Verschwenken des ersten Anzeigeelements um die Lagerachse. Hierzu ist das Mitnahmeelement vorzugsweise fest mit dem Hinterbauelement verbunden. Die Verbindung zwischen dem Mitnahmeelement und dem ersten Anzeigelement ist herbei derart ausgebildet, dass beim Einfedern eine Mitnahme, beziehungsweise ein Verschwenken des ersten Anzeigeelements durch das Mitnahmeelement erfolgt. Beim Ausfedern löst sich die Verbindung zwischen dem Mitnahmeelement und dem ersten Anzeigeelement, so dass das erste Anzeigeelement in der erzielten Stellung verbleibt. Dies ist vorzugsweise dadurch realisiert, dass das Mitnahmeelement beim Einfedern an eine Betätigungsfläche des Anzeigeelements anliegt. Es ist beispielsweise möglich, das Mitnahmeelement als Stift auszubilden, der fest mit dem Hinterbauelement wie einer Sattelstrebe oder einer Wippe verbunden ist. Hierbei ist es möglich einen entsprechenden Ansatz an dem Hinterbauelement vorzusehen, der beispielsweise auch einstückig mit diesem ausgebildet sein kann.

In besonders bevorzugter Ausführungsform ist das erste Anzeigeelement ringförmig ausgebildet und bevorzugt durch das Lagerelement fixiert, dass heißt drehbar gehalten. Vorzugsweise umgibt das erste Anzeigeelement das Lagerelement beziehungsweise die Lagerachse somit vollständig. Ein drehbares Halten des Anzeigeelements kann hierbei vorzugsweise durch ein Element des Lagers erfolgen, bei dem es sich beispielsweise um einen Lagerdeckel handelt, der das Lager vor Verschmutzungen schützt.

Um zu gewährleisten dass das erste Anzeigeelement in seiner Maximalposition, dass heißt beispielsweise der Position des Negativeinfederwegs oder des maximalen Einfederwegs verbleibt, ist es bevorzugt, dass zwischen dem ersten Anzeigeelement und einem beim Einfedern des Hinterbaus nicht bewegten Element eine Verbindung, insbesondere eine Reibverbindung besteht. Bei einem derartigen Element handelt es sich beispielsweise um den Teil eines Rahmens oder auch ein mit dem Rahmen verbundenes Teil, wie beispielsweise eine Lagerschale oder ein anderes, nicht bewegtes Lagerelement. Durch die entsprechenden Reibkräfte ist sichergestellt, dass kein selbsttätiges Drehen, insbesondere Zurückdrehen beim Ausfedern des ersten Anzeigeelements erfolgt. Hierbei ist es möglich, dass eine Fläche des ersten Anzeigeelements an einer Fläche eines mit dem Rahmen unmittelbar verbundenen Elements anliegt und durch die entsprechende Reibung ein Halteelement ausgebildet ist. Bevorzugt ist das Vorsehen eines zusätzlichen Halteelements wie eines die Lagerachse umgebenden O-Rings, durch den die entsprechende Reibung realisiert wird.

Die Skala ist vorzugsweise auf einem Kreisbogen angeordnet, so dass der Negativfederweg sowie der maximale Einfederweg auf einfache Weise abgelesen werden kann. Je nach Ausgestaltung der Hinterbaufederung und je nach Auswahl des Gelenks, an dem die erfindungsgemäße Anzeigeeinrichtung angeordnet ist, ist die Skala gegebenenfalls nicht-linear. Ferner ist die Skala abhängig von dem verwendeten Federungselement, insbesondere dessen Dämpferbaulänge und dessen Hub. Besonders bevorzugt ist es daher, eine austauschbare Skala vorzusehen. Erfolgt beispielsweise ein Austausch des Ferderungselements, so kann unmittelbar auch die Skala mit ausgetauscht werden. Auch werden von Herstellern von Fahrradrahmen diese mit unterschiedlichen Federelementen ausgeliefert, wobei sodann stets die entsprechende Skala verwendet wird. Vorzugsweise ist die Skala als Aufkleber oder als Metallplättchen ausgebildet, so dass die Skala auf einfache Weise ausgetauscht werden kann.

Nachfolgend wird die Erfindung an Hand einer bevorzugten Ausführungsform unter Bezugnahme auf die anliegenden Zeichnungen näher erläutert.

Es zeigen:
- Figur 1: eine schematische Seitenansicht eines Mountainbikerahmens mit gefedertem Hinterbau,
- Figur 2: eine schematische vergrößerte Ansicht des in Figur 1 dargestellten Dämpferelements und

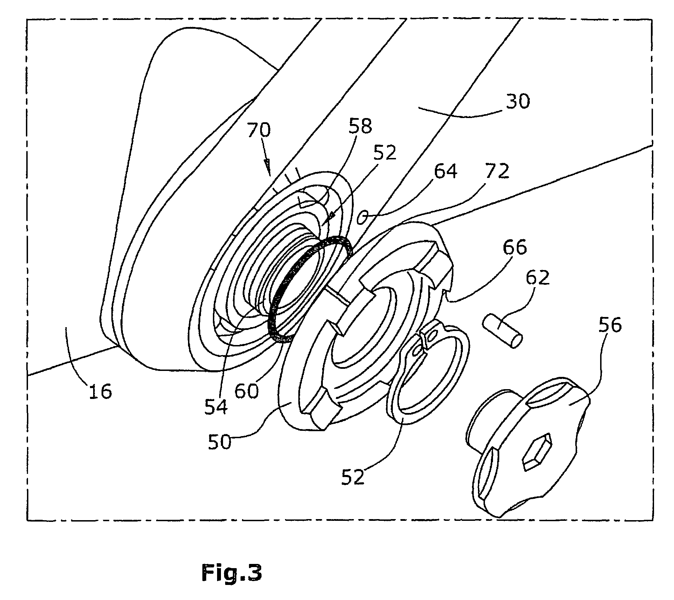

- Figur 3: eine schematische Explosionszeichnung des Anzeigelements.

Ein Mountainbikefahrradrahmen 10 weist ein Oberrohr 12, ein Sattelrohr 14 und ein Unterrohr 16 auf. Mit dem Fahrradrahmen 10 ist ein gefederter Hinterbau 18 verbunden. Um die Federung des Hinterbaus zu realisieren, sind die beiden Kettenstreben 20 über im Bereich einer Tretlageraufnahme 22 angeordnete Kettenstrebengelenke 24 mit dem Fahrradrahmen 10 verbunden. Die beiden Sattelstreben 26 sind bei dem dargestellten Ausführungsbeispiel eines gefederten Hinterbaus 18 jeweils seitlich an dem Sattelrohr 14 vorbeigeführt und über ein Gelenk 28 mit einer Wippe 30 verbunden. Die Wippe 30 ist über ein Gelenk 32 mit dem Unterrohr 16 des Fahrradrahmens verbunden.

Ferner ist mit der Wippe 30 über ein Gelenk 34 im dargestellten Ausführungsbeispiel eine Kolbenstange 36 der Dämpfereinrichtung 38 verbunden. Die Dämpfereinrichtung 38 ist ferner über eine weitere Gelenkverbindung 40 und ein Zwischenteil 42 mit dem Unterrohr 16 verbunden.

Im dargestellten Ausführungsbeispiel ist die Anzeigeeinrichtung an dem Gelenk 32 vorgesehen. Jedoch könnte die erfindungsgemäße Anzeigeeinrichtung auch an jedem anderen Gelenk des gefederten Hinterbaus 18, dass heisst an dem Gelenk, das beim Einfedern des Hinterbaus verschwenkt wird, vorgesehen sein. Hierbei handelt es sich insbesondere um die Gelenke 24, 28 und gegebenenfalls sogar die Gelenke 34 oder 40. Auch die an den Ausfallenden 44 vorgesehenen Gelenke 46,48 können zur Anordnung der erfindungsgemäßen Anzeigeeinreichung vorgesehen werden.

Die erfindungsgemäße Anzeigeeinrichtung weist im dargestellten Ausführungsbeispiel ein ringförmig ausgebildetes erstes Anzeigeelement 50 auf, das ein Lagerelement 52 umgibt. Das Lagerelement 52 ist im Unterrohr 16 angeordnet und dient als Lagerung des Gelenks 32 der Wippe 30. Das ringförmige erste Anzeigeelement 50 wird durch einen Sprengring 52 drehbar auf einer Lagerachse 54 fixiert. Anschließend wird das Lager durch einen Lagerdeckel 56 verschlossen, um Verschmutzungen zu verhindern. Zwischen dem ersten Anzeigeelement und einer Seite 58 des Lagerelements 52 ist ein Halteelement 60 angeordnet, dass im dargestellten Ausführungsbeispiel als O-Ring ausgebildet ist. Durch den O-Ring 60, der an der Rückseite des ersten Anzeigeelements 50 sowie an der Oberfläche 58 des Lagers 52 anliegt, erfolgt aufgrund der Reibungskräfte ein Halten des ersten Anzeigeelements 50 in einer maximalen Auslenkposition, dass heißt in der Position des Negativfederweges oder des maximalen Einfederweges.

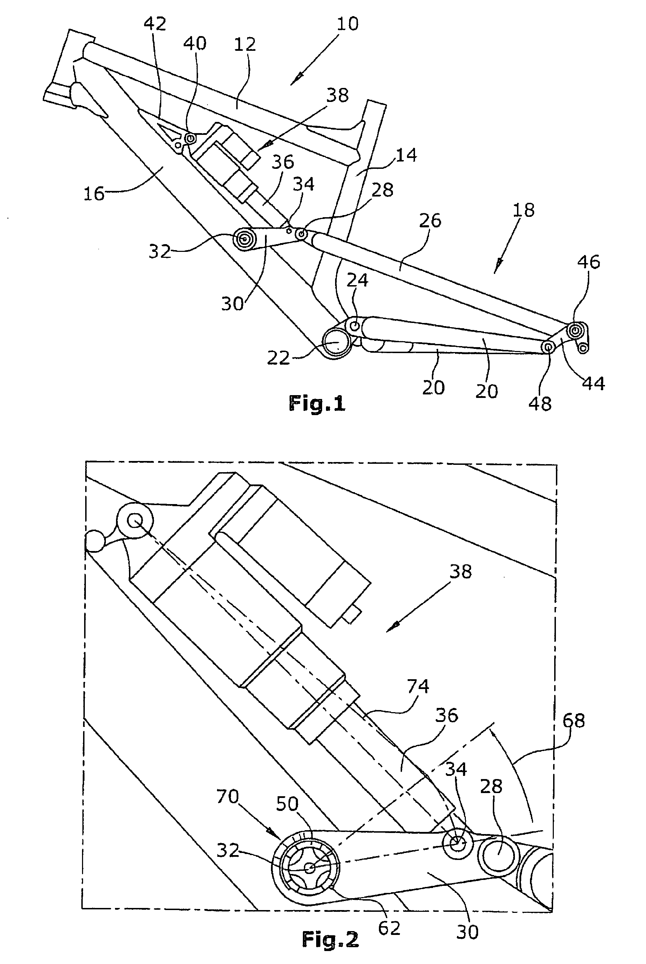

Um beim Einfedern des Hinterbauelements 38 eine definierte Drehbewegung des ersten Anzeigeelements um einen entsprechenden Winkel zu gewährleisten, ist mit dem Hinterbauelement, bei dem es sich im dargestellten Ausführungsbeispiel um die Wippe 30 handelt, ein Mitnahmeelement 62 verbunden. Im dargestellten Ausführungsbeispiel handelt es sich bei dem Mitnahmelement 62 um einen zylindrischen Stift, der in einer Bohrung 64 der Wippe 30, beispielsweise durch Einkleben fixiert ist. Beim Einfedern des Hinterbaus 18 liegt das Mitnahmeelement 62 an einer Betätigungsfläche 66 des ersten Anzeigeelements an. Hierdurch erfolgt beim Einfedern des Hinterbaus 18, dass heißt bei einem Verschwenken der Wippe 30 in Richtung eines Pfeils 68 (Figur 2) ein Mitnehmen und somit ein Verdrehen des ersten Anzeigeelements 50 in GegenUhrzeigerrichtung. Aufgrund des Halteelements 60 verbleibt das erste Anzeigeelement 50 in der verdrehten Stellung. Wird dies durch ein einmaliges Setzen auf das Fahrrad hervorgerufenen, so befindet sich das erste Anzeigeelement 50 somit in einer Position, in der der Negativfederweg abgelesen werden kann. Hierzu ist ein zweites Anzeigeelement 70 vorgesehen, bei dem es sich im dargestellten Ausführungsbeispiel um eine unmittelbar auf der Wippe 30 angeordnete Skala handelt. Um ein exaktes Ablesen zu ermöglichen, weist im dargestellten Ausführungsbeispiel das erste Anzeigeelement 50 einen Zeiger 70 wie einen Strich oder eine Einkerbung auf. Da das erste Anzeigeelement 50 beim Einfedern des Hinterbaus 18 durch das Mitnahmeelement 62 verdreht wird und in der verdrehten Stellung aufgrund der Reibverbindung zu einem mit dem Rahmen verbundenen Bauteil 58 in der verdrehten Position gehalten wird, erfolgt nach dem Ausfedern des Hinterbaus 18 keine Relativbewegung zwischen dem zweiten Anzeigeelement, beziehungsweise der Skala 70 und dem ersten Anzeigeelement 50. Der Betrag der Einfederung kann an der Skala 70 mithilfe des Zeigers 72 abgelesen werden. Hierbei ist es möglich, an der Skala 70 beispielsweise prozentuale Einfederbeträge oder auch Einfederwege in Millimetern anzugeben.

Die Skala 70 ist im dargestellten Ausführungsbeispiel nicht linear, da, wie durch die gestrichelte Linie 74 dargestellt, beim Einfedern auch ein Verschwenken des Dämpfers 38 erfolgt.

Auf dieselbe Weise wie die Bestimmung des Negativfederwegs kann auch der maximale Einfederweg bestimmt werden. Während einer Tour wird das erste Anzeigeelement 50 von dem Stift 62 stets in seine Maximalstellung mitgenommen. Über die Skala 70 kann sodann der maximale Einfederweg abgelesen werden.

## Patentansprüche

1. Anzeigeeinrichtung zur Anzeige des Negativfederwegs und/oder des maximalen Einfederwegs bei einem gefederten Fahrradhinterbau (18), mit
einem beim Ein- und Ausfedern des Hinterbaus (18) eine Schwenkbewegung um eine Lagerachse (54) ausführenden Hinterbauelement (30),
einem die Lagerachse (54) zumindest teilweise umgebenden, um die Lagerachse (54) relativ zum Hinterbauelement (30) schwenkbaren ersten Anzeigeelement (50) und
einem mit dem Hinterbauelement (30) verbundenen zweiten Anzeigeelement (70), so dass durch die Relativbewegung zwischen den beiden Anzeigelementen (50, 70) der Negativfederweg und/oder der maximale Einfederweg bestimmbar ist.

2. Anzeigeeinrichtung nach Anspruch 1, **dadurch gekennzeichnet, dass** eines der beiden Anzeigeelemente eine Skala (70) und das andere einen Zeiger (72) aufweist.

3. Anzeigeeinrichtung nach Anspruch 1 oder 2, **dadurch gekennzeichnet, dass** das zweite Anzeigeelement (70) fest mit dem Hinterbauelement (30) verbunden ist, insbesondere an einer Oberfläche des Hinterbauelements (30) angeordnet ist.

4. Anzeigeeinrichtung nach Anspruch 1 bis 3 **gekennzeichnet durch** ein Mitnahmelement (62), das beim Einfedern des Hinterbaus (18) das erste Anzeigeelement (50) um die Lagerachse (54) schwenkt.

5. Anzeigeeinrichtung nach Anspruch 4, **dadurch gekennzeichnet, dass** das Mitnahmeelement (62) fest mit dem Hinterbauelement (30) verbunden ist.

6. Anzeigeeinrichtung nach Anspruch 4 oder 5, **dadurch gekennzeichnet, dass** das Mitnahmeelement (62) beim Einfedern des Hinterbaus (18) an einer Betätigungsfläche (66) des ersten Anzeigeelements (50) anliegt.

7. Anzeigeeinrichtung nach Anspruch 1 bis 6, **dadurch gekennzeichnet, dass** das erste Anzeigeelement (50) ringförmig ausgebildet ist und vorzugsweise durch ein Lagerelement fixiert ist.

8. Anzeigeeinrichtung nach Anspruch 1 bis 7, **gekennzeichnet durch** ein Halteelement (60) das das erste Anzeigeelement (50) in der Position des Negativfederweg oder maximalen Einfederweg hält.

9. Anzeigeeinrichtung nach Anspruch 8, **dadurch gekennzeichnet, dass** das Halteelement (60) als Reibelement insbesondere als zwischen dem ersten Anzeigeelement (50) und einem Lager (52) angeordneter O-Ring (60) ausgebildet ist.

10. Anzeigeeinrichtung nach Anspruch 1 bis 9, **dadurch gekennzeichnet, dass** das Hinterbauelement eine Kettenstrebe (20) oder eine Sattelstrebe (26) oder ein zwischen der Kettenstrebe, beziehungsweise der Sattelstrebe und einem Rahmenelement (16) angeordnetes Zwischenelement ist.

## Claims

1. An indicator means for indicating the sag and/or the maximum suspension travel for a sprung rear section (18) of a bicycle, comprising
a rear section element (30) performing a pivoting movement about a bearing axis (54) as the rear section (18) compresses the suspension and the suspension rebounds,
a first indicator element (50) pivotable about the bearing axis (54) with respect to the rear section element (30) and at least partly surrounding the bearing axis (54), and
a second indicator element (70) connected to the rear section element (30) so that the sag and/or the maximum suspension travel can be determined by the relative movement between the two indicator elements (50, 70).

2. The indicator means of claim 1, **characterized in that** one of the two indicator elements comprises a scale (70) and the other comprises a needle (72).

3. The indicator means of claim 1 or 2, **characterized in that** the second indicator element (70) is fixedly connected to the rear section element (30), in particular provided on a surface of the rear section element (30).

4. The indicator means of one of claims 1 to 3, **characterized by** an engaging element (62) that pivots the first indicator means (50) about the bearing axis (54) when the rear section (18) compresses the suspension.

5. The indicator means of claim 4, **characterized in that** the engaging element (62) is fixedly connected to the rear section element (30).

6. The indicator means of claim 4 or 5, **characterized in that** the engaging element (62) contacts an actuation surface (66) of the first indicator element (50) when the rear section (18) compresses the suspension.

7. The indicator means of one of claims 1 to 6, **characterized in that** the first indicator element (50) is annular in shape and is preferably fixed by means of a bearing element.

8. The indicator means of one of claims 1 to 7, **characterized by** a retaining element (60) retaining the first indicator element (50) in the position of the sag or the maximum suspension travel.

9. The indicator means of claim 8, **characterized in that** the retaining element (60) is designed as a friction element, in particular as an O-ring (60) arranged between the first indicator element (50) and a bearing (52).

10. The indicator means of one of claims 1 to 9, **characterized in that** the rear section element is a chain stay (20) or a seat stay (26) or an intermediate element arranged between the chain stay or the seat stay and a frame element (16).

## Revendications

1. Dispositif indicateur pour indiquer le fléchissement et/ou la course de compression maximale d'une section arrière de bicyclette (18) suspendue, comprenant
un élément (30) de la section arrière pivotant autour d'un axe de support (54) quand la section arrière (18) compresse la suspension et quand la suspension se détente,
un premier élément indicateur (50) entourant l'axe de support (54) au moins partiellement et étant pivotable autour de l'axe de support (54) par rapport audit élément (30) de la section arrière, et
un deuxième élément indicateur (70) connecté audit élément (30) de la section arrière, de sorte que le fléchissement et/ou la course de compression maximale peut être déterminé par l'intermédiaire du mouvement relatif entre les deux éléments indicateur (50, 70).

2. Dispositif indicateur selon la revendication 1, **caractérisé en ce que** l'un des deux éléments indicateur comprend une graduation (70) et l'autre comprend une aiguille (72).

3. Dispositif indicateur selon les revendications 1 ou 2, **caractérisé en ce que** ledit deuxième élément indicateur (70) est solidaire dudit élément (30) de la section arrière, notamment disposé sur une surface dudit élément (30) de la section arrière.

4. Dispositif indicateur selon l'une quelconque des revendications 1 à 3, **caractérisé par** un élément entraineur (62) pivotant ledit premier élément indicateur (50) autour de l'axe de support (54) quand la section arrière (18) compresse la suspension.

5. Dispositif indicateur selon la revendication 4, **caractérisé en ce que** ledit élément entraineur (62) est solidaire dudit élément (30) de la section arrière.

6. Dispositif indicateur selon les revendications 4 ou 5, **caractérisé en ce que** ledit élément entraineur (62) est en contact avec une face d'actionnement (66) dudit premier élément indicateur (50) quand la section arrière (18) compresse la suspension.

7. Dispositif indicateur selon l'une quelconque des revendications 1 à 6, **caractérisé en ce que** ledit premier élément indicateur (50) est annulaire et est fixé de préférence par un élément de support.

8. Dispositif indicateur selon l'une quelconque des revendications 1 à 7, **caractérisé par** un élément de retenue (60) retenant ledit premier élément indicateur (50) dans la position de fléchissement ou de la course de compression maximale.

9. Dispositif indicateur selon la revendication 8, **caractérisé en ce que** ledit élément de retenue (60) est configuré comme élément de friction, notamment comme joint torique (60) disposé entre ledit premier élément indicateur (50) et un support (52).

10. Dispositif indicateur selon l'une quelconque des revendications 1 à 9, **caractérisé en ce que** ledit élément de la section arrière est la base arrière (20) ou la fourche de la selle (26) ou un élément intermédiaire disposé entre la base arrière ou la fourche de la selle, respectivement, et un élément de cadre (16).
